# FASCICULE DE BREVET EUROPEEN

(11) **EP 1 930 687 B1**
(45) Date de publication et mention de la délivrance du brevet: **23.06.2010**
(21) Numéro de dépôt: 06125417.3
(22) Date de dépôt: 05.12.2006
(51) Int. Cl.: G01B 5/012, G01B 7/012

(54) **Magasin pour machine de mesure et outil correspondant**
Magazin für eine Messmaschine und entsprechendes Werkzeug
Store for measurement machine and corresponding tool

(43) Date de publication de la demande: 11.06.2008
(73) Titulaire: Hexagon Metrology AB, 131 26 Naka Strand, Stockholm (SE)
(72) Inventeur: Jordil, Pascal, 1612 Ecoteaux (CH); Vullioud, Benjamin, Gollion 1124 (CH)
(74) Mandataire: P&TS Patents & Technology Surveys SA

(56) Documents cités:
- EP-A- 1 669 713
- WO-A-03/083407

## Description

### Domaine technique

La présente invention concerne un système d'outils connectables à une machine de mesure de coordonnées, par exemple une touche de palpage, une caméra vidéo ou tout autre outil de mesure mécanique ou optique qui envoient préférablement des signaux électriques, ainsi qu'un magasin permettant l'échange automatique d'outils lors d'une opération de mesure avec la machine et un outil correspondant. La présente invention n'est pas limitée au domaine de la métrologie ou de la mesure de dimensions, mais peut être appliquée à des robots avec outils interchangeables, ou à tout autre système comportant des outils interchangeables automatiquement.

### Etat de la technique

On connaît déjà plusieurs exemples de machines à mesurer des coordonnées avec des outils interchangeables automatiquement. Il s'agit, en général, de systèmes de mesure dans lesquels la tête mobile de la machine de mesure et les outils comportent des dispositifs de couplage mutuels, pouvant être verrouillés et déverrouillés automatiquement, et aptes à réaliser une liaison mécanique très précise et stable entre la tête de mesure de la machine et l'outil choisi.

Les systèmes connus comportent aussi souvent des magasins d'outils, placés dans le volume de travail de la machine de mesure, dans lequel la machine peut poser les outils à la fin d'une tâche de mesure, et prélever l'outil requis pour la tache suivante. La machine de mesure peut ainsi exécuter des séries de mesures complexes, suivant une séquence de déplacements programmés, ou suite aux commandes manuelles d'un opérateur.

La précision du couplage entre la tête de mesure et les différents outils est évidemment primordiale pour l'exactitude des mesures. Il est aussi très important que ce couplage soit hautement reproductible, pour éviter les opérations de calibration à chaque changement d'outil. A cette fin on prévoit souvent une liaison isostatique avec exactement six points de contact entre la tête de mesure et l'outil, de manière à déterminer exactement le positionnement de l'outil relatif à la tête de mesure. La demande de brevet EP1577050 décrit une liaison avec trois goupilles dont les axes sont écartés de 120° sur la tête de mesure, et trois couples de billes positionnées en correspondance sur l'outil, réalisant une liaison isostatique.

Dans ce type de liaison, la précision repose sur la qualité des surfaces de contact. Il est donc important, lors des opérations de connexion et de déconnexion, d'éviter ou limiter les chocs pouvant modifier ou altérer ces surfaces.

Le document US4651405 décrit des outils de mesure, destinés à être connecté sur le bras d'une machine à mesurer des coordonnées par une liaison mécanique, utilisant un appendice sur l'outil qui s'engage avec une came de la tête de mesure. Le verrouillage de l'outil sur la machine a lieu lorsqu'on tourne la came de 90° par un autre outil prévu à cet effet. Si l'on souhaite automatiser cette opération, le magasin d'outil doit contenir un ou plusieurs actuateurs pour actionner la came et passer de la position verrouillée à la position déverrouillée, et inversement, selon les besoins.

Ces dispositifs comportent, pour chaque position du magasin, un actuateur pour actionner la came et verrouiller, respectivement déverrouiller l'outil. Ces actuateurs, et les dispositifs de commande associés, augmentent la complexité et le coût du magasin, et nécessitent des systèmes de cames décrits.

La demande de brevet EP416524 décrit un palpeur et un magasin d'outils avec une connexion magnétique entre la tête et la touche de palpage, comprenant un aimant permanent et un électro-aimant. Lors du changement d'outil, la force magnétique peur être neutralisée par un électroaimant dans la tête de mesure, permettant ainsi la séparation entre tête de mesure et outil. Le brevet US5028901 décrit un système similaire, dans lequel l'électroaimant est externe et séparé de la tête de mesure.

Une limitation de ces systèmes connus est qu'ils requièrent un élément supplémentaire, qui augmente le coût, la complexité et les dimensions de la tête de mesure.

Le brevet EP426492 décrit une touche de palpage interchangeable liée par des aimants au corps du palpeur. Cette touche ne comporte pas d'éléments destinés à l'interfacer avec un système de changement d'outils automatique.

Le brevet US4604787 décrit un bras de robot industriel avec des outils interchangeables, capable de déposer un outil dans un logement d'un magasin et de saisir un nouvel outil, du même magasin. Le magasin comporte des logements pour les outils, dans lesquels les outils peuvent être glissés selon une direction transversale à leur axe, et sont retenus axialement. La connexion mécanique entre le bras et l'outil s'ouvre automatiquement sous l'effet d'une force de séparation axiale dépassant un seuil prédéterminé.

Le brevet EP566719 décrit un système d'outils et un magasin dans lequel les outils comprennent un aimant permanent et sont retenus magnétiquement sur la tête de mesure correspondant. La séparation entre l'outil dans le magasin et la tête de mesure a lieu sous l'action d'une force d'arrachement axiale dépassant l'attraction magnétique, de manière analogique à ce qui est décrit dans le document US4604787.

Dans ces systèmes, la force axiale requise pour arracher l'outil est assez importante, et cela pose des problèmes pour atteindre une haute précision. Il est important, pour la précision du système de mesure, que le magasin, l'outil et le bras de la machine de mesure ne subissent pas des efforts mécaniques excessivement élevés, pouvant entraîner un déréglage et une imprécision de mesure.

Le document WO03083407 décrit un magasin dans lequel des outils pour une machine de mesure sont logés dans des bras flexibles, de manière à permettre un basculement de l'outil par rapport à la tête de mesure lorsque celle-ci s'éloigne du magasin.

Le document EP1669713décrit un magasin dans lequel les outils sont maintenus par une goupille horizontale, des appuis inférieurs, et deux surfaces de retenue supérieures à hauteurs différentes. Dans cette réalisation, l'outil bascule, lors de la déconnexion, selon un axe parallèle à la direction d'insertion.

### Bref résumé de l'invention

Un but de la présente invention est de proposer un outil interchangeable et un magasin correspondant exempts des limitations des dispositifs connus.

L'invention se propose aussi le but d'augmenter la précision et la reproductibilité de l'opération de changement d'outil.

Ce but est atteint par les dispositifs qui font l'objet des revendications indépendantes, des caractéristiques optionnelles étant introduites dans les revendications dépendantes et dans la description.

### Brève description des dessins

Des exemples de mise en oeuvre de l'invention sont indiqués dans la description illustrée par les figures annexées dans lesquelles :
La figure 1 illustre un magasin d'outils avec des logements pour plusieurs outils selon un mode de réalisation de l'invention.
La figure 2 illustre le magasin d'outils de la figure 1 avec un logement occupé par un outil, en ce cas un palpeur pour une machine à mesurer des coordonnées.
La figure 3 illustre le magasin de l'invention en une position repliée, selon un aspect de l'invention.
La figure 4 montre en détail deux logements du magasin d'outils de l'invention, vus du haut en représentation isométrique.
La figure 5 montre en détail deux logements du magasin d'outils de l'invention, vus du bas en représentation isométrique.
La figure 6 illustre la position de l'outil dans le magasin suite à la déconnexion de l'outil de la tête de mesure.

### Exemple(s) de mode de réalisation de l'invention

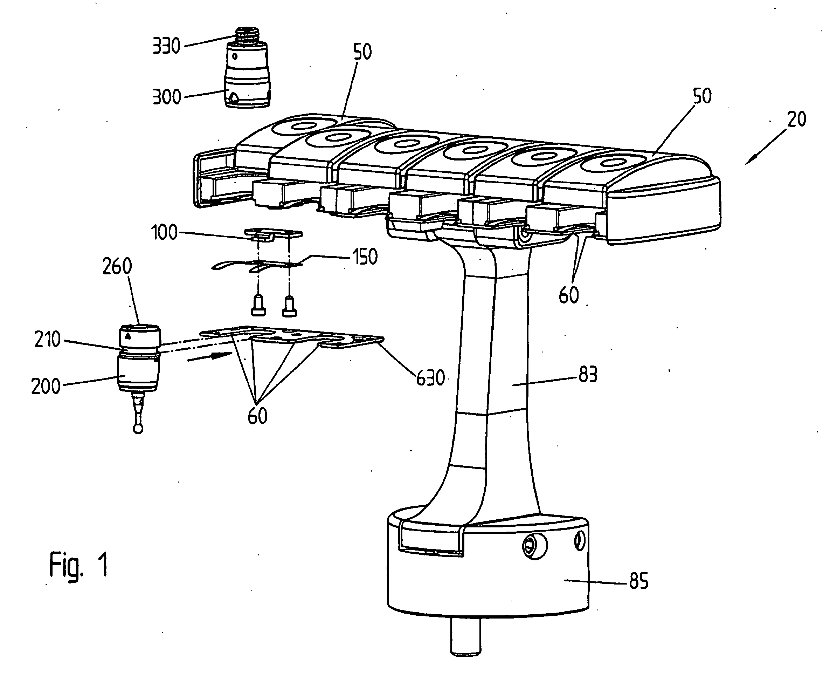

La figure 1 illustre un magasin d'outils 20, spécialement conçu pour loger des outils interchangeables 200 d'une machine à mesurer des coordonnées (CMM), et la description suivante fait référence à cette application particulière. L'invention toutefois n'est pas limitée à cette application, mais comprend peut également s'appliquer à des magasins pour des machines-outils automatiques, des robots industriels, ou toute autre machine à outils interchangeables.

Le magasin 20 comprend une base 85 pour la fixation dans le volume d'opération de la CMM. Typiquement la base 85 est solidement fixée sur le plan de référence de la machine (non visible), sur laquelle reposent également les pièces à mesurer. D'autres dispositions sont toutefois possibles. La position du magasin 20 dans le référentiel de la machine à mesurer est déterminée préalablement à la mesure et au changement d'outil, par exemple par les coordonnées d'une série de points de repère prédéfinis, relevées lors d'une procédure d'étalonnage, bien connue par l'homme du métier.

Dans la suite de la description on fera référence à la direction verticale comme étant la direction perpendiculaire au plan de référence de la machine à mesurer, qui est conventionnellement un plan de référence horizontal. Ces références faites aux orientations conventionnelles ont pour but uniquement d'améliorer la lisibilité de la description et ne limitent pas l'invention, qui pourrait être appliquée à des magasins d'outils orientés selon une direction quelconque dans l'espace. Les termes "haut" et "bas", "supérieur" et "inférieur" doivent aussi être interprétés comme des termes descriptifs et non-limitatifs, relatifs à ces orientations conventionnelles.

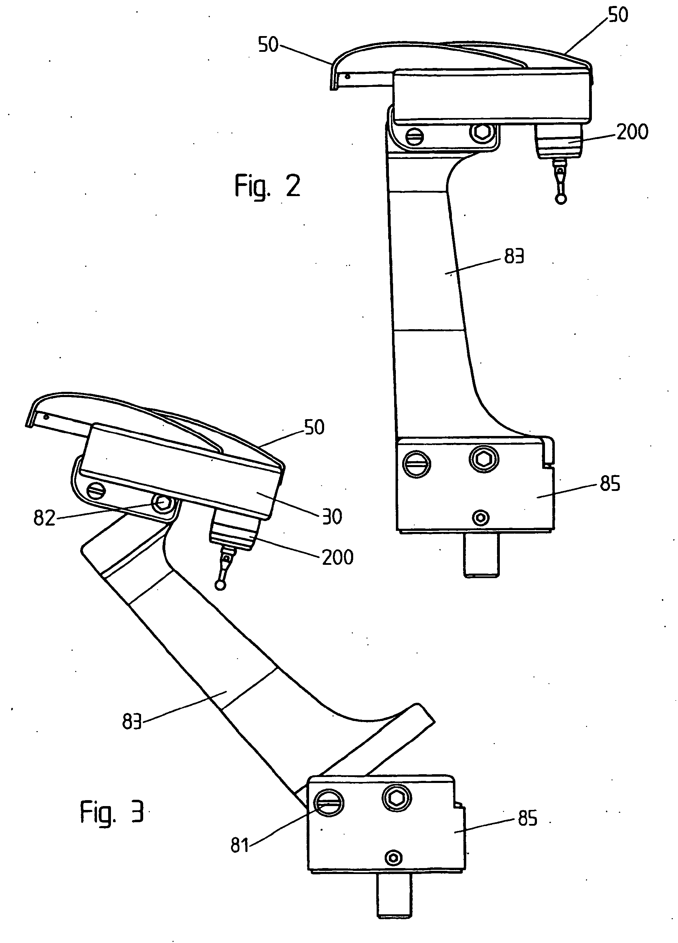

Le magasin 20 comporte préférablement une pluralité de logements, pour stocker une pluralité d'outils 200. De cette manière, il est possible d'exécuter des mesures complexes employant divers outils, la machine CMM étant arrangée pour déposer un outil dans un logement disponible du magasin 20, et prélever ensuite un autre outil dans un autre logement, chaque fois qu'il est nécessaire. Avantageusement, et avec référence à la figure 2, les logements sont portés par un corps supérieur 650, surélevé relativement à la base 85 par le bras 83, de manière à pouvoir accueillir des outils de hauteurs différentes sans crainte de contact avec la surface de référence.

En se référant maintenant à la figure 3, le bras 83 est préférablement articulé, selon les axes 81 et 82, de manière à se replier en cas de collision. De cette manière, on réduit le risque de dégâts, suite, par exemple, à une fausse manipulation sur la machine à mesurer, causant un choc entre la tête de mesure, voir l'outil de mesure et le magasin. En condition normale, le magasin 20 est maintenu dans la position dépliée de la figure 2 par des dispositifs précis de détente élastique de type connu, non représentés. Des amortisseurs, aussi non visibles sur la figure, amortissent le repli du magasin, en cas de choc.

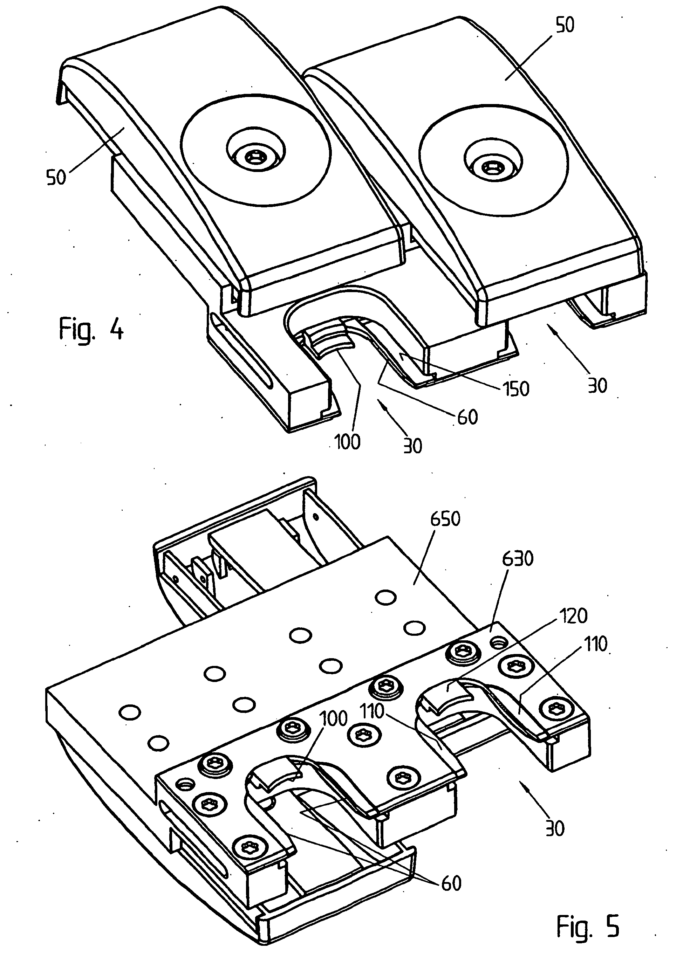

Préférablement chaque logement comporte un couvercle de protection 50, visible en détail sur la figure 4, capable de coulisser selon une direction horizontale, entre une position ouverte, dans laquelle le logement correspondant est accessible, et une position fermée, protégeant du logement et de tout outil s'y trouvant. Les protections 50 peuvent aussi, selon une variante, se bloquer en position ouverte.

Chaque logement comporte également des guides 60 permettant l'insertion des outils dans le logement selon une direction horizontale et le retrait des outils du logement selon la même direction. Selon la variante de l'invention représentée par la figure 1 et, plus en détail, par la figure 5, le magasin 20 comporte un corps 650, reposant sur le bras 83 et sur lequel coulissent les couvercles de protection 50. Les guides 60 sont constituées par deux arêtes rectilignes et parallèles découpées dans une plaque métallique 630 vissée ou fixée sur le corps 650.

L'outil 200 comporte des surfaces ou zones d'engagement 210, coopérant avec les guides 60. Dans l'exemple représenté (fig. 1) les surfaces d'engagement sont des surfaces d'une gorge annulaire de section carrée ou rectangulaire 210 entourant symétriquement le corps circulaire de l'outil 200. D'autres dispositions sont toutefois possibles.

La connexion entre les outils et la machine de mesure est effectuée par l'intermédiaire d'un adaptateur 300, fixé sur la tête mobile de la machine de mesure. Dans l'exemple représenté (fig. 1) l'adaptateur est fixé à la tête mobile (non visible) par une tige filetée 330. D'autres systèmes de fixation sont toutefois possibles et compris dans la présente invention. Préférablement l'outil 200 et l'adaptateur 300 sont liés de manière précise et reproductible par des éléments magnétiques 260, par exemple des aimants permanents, et par un système d'organes de contact de précision, par exemple trois goupilles dont les axes sont écartés de 120° sur la tête de mesure, et trois couples de billes positionnées en correspondance sur l'outil, réalisant une liaison isostatique, déterminant exactement le positionnement de l'outil relatif à la tête de mesure.

Dans le cas représenté d'un adaptateur vissable, une surface d'engagement 210 annulaire, ou pour le moins symétrique axialement, est particulièrement appropriée. Il est en fait difficile d'assurer une position angulaire déterminée de l'adaptateur sur la tête, car celle-ci dépend de la force de serrage et de la friction entre les surfaces. La gorge annulaire 210 ne comporte pas d'orientation préférentielle et peut accomplir sa fonction, comme il sera expliqué par la suite, indépendamment de l'angle ou positionnement relatif de l'outil par rapport à un axe vertical.

Lors du dépôt d'un outil dans le magasin, la machine de mesure déplace sa tête de mesure, avec l'adaptateur 300 et l'outil 200, en face à un logement du magasin 30, la gorge 210 alignée avec les guides 60. La tête de mesure se déplace ensuite horizontalement, selon une direction parallèle aux guides 60, jusqu'à engagement des guides 60 dans la gorge 210. Le diamètre interne de la gorge 210 correspond à la distance entre les guides 60, avec un jeu suffisant, par exemple un jeu de quelque dixième de millimètre, pour consentir une insertion aisée et sans contraintes latérales.

Le couvercle 50, si présent, est maintenu normalement en position fermée par un ressort ou un autre élément élastique idoine. Lors du déplacement horizontal mentionné ci-dessus. L'adaptateur 300 entre en contact avec le couvercle et le fait coulisser pour accéder au logement du magasin.

En référence à la figure 4, chaque logement comporte une dent 100, entre les guides 60. L'insertion de l'outil 200 entre les guides 60 se termine lorsque la dent 100 s'engage, au moins partiellement, dans la gorge 210. Selon un aspect de l'invention, la surface inférieure 120 de la dent 100 n'est pas alignée sur le plan horizontal des surfaces inférieures 110 des guides 60. Par exemple la surface inférieure 120 de la dent 100 est décalée vers le bas de 0,10-0,50 mm par rapport au plan des surfaces inférieures 110 des guides 60.

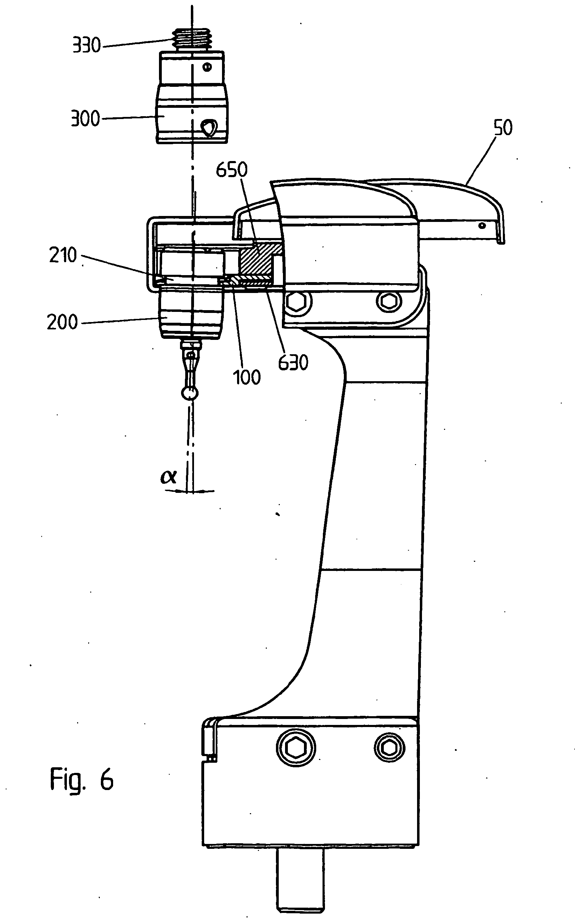

La déconnexion de l'outil 200 de l'adaptateur 300 est effectuée de la façon suivante : la machine de mesure est actionnée de manière à occasionner un mouvement vertical de la tête de mesure vers le haut. Lors de ce mouvement la surface inférieure 120 de la dent 100 (voir figure 5) entre en contact avec la surface inférieure interne de la gorge 210. A partir de cet instant, l'outil ne peut plus suivre le mouvement vertical de l'adaptateur, car il est retenu par la surface de retenue 120 de la dent 100. Deux effets se produisent alors :
1. puisque la force de la liaison magnétique et la force appliquée par la dent 100 ne sont pas alignées, une séparation apparaît entre l'adaptateur 300 et l'outil 200. Ce dernier bascule d'un angle α (voir figure 6) jusqu'à que la gorge 210 de l'outil entre en contact avec les surfaces inférieures 110 des guides 60. Grâce à l'effet de levier, la force appliquée par la dent 100 est sensiblement inférieure à la force totale d'attraction magnétique.
2. le basculement fait augmenter l'entrefer entre les éléments magnétiques sur l'outil 200 et l'adaptateur 300. La force magnétique dépend très sensiblement de l'entrefer, le basculement entraîne une réduction appréciable de la force d'attraction. Et prédispose le décrochage de l'outil.

Le basculement est limité par les surfaces inférieures de maintien 110 (voir figure 5) des guides 60 entrant en contact avec la surface inférieure de la gorge 210. A partir de ce moment la force verticale exercée par le magasin 20 sur l'outil 200 se partage entre les deux surfaces de inférieures de retenue 110 des guides 60 et la surface inférieure de retenue 120 de la dent 100. Lorsque cette force dépasse l'attraction magnétique, réduite suite au basculement, il y a séparation complète de l'outil 200 de l'adaptateur 300.

La disposition de l'invention permet de réduire de manière appréciable les efforts mécaniques exercés sur les guides 60 lors du désaccouplement. Cette réduction est due au basculement de l'outil et au fait que la force résiduelle de retenue due à l'effet magnétique se partage entre les deux surfaces inférieures de retenue 110 des guides 60 et la surface inférieure de retenue 120 de la dent 100. Ce partage de la force sur trois points ou régions de contact a un effet positif sur la précision d'accouplement.

Par exemple, un décalage des surfaces inférieure entre la dent 100 et les surfaces inférieures de maintien des guides 60 de 0,25 mm, suffit pour occasionner un angle de basculement de 2° environ, ce qui est très efficace.

Les ressorts à lame 150 (voir figures 1 et 4) s'appuient sur la surface supérieure de la gorge 120, introduisant une certaine friction, afin d'éviter tout mouvement non désirés de l'outil dans le logement, par exemple suite à des vibrations, sans toutefois bloquer complètement l'outil 200 ni occasionner des efforts importants sur la tête lors du changement d'outil. De cette manière, lorsque l'outil sera repris, la tête de mesure pourra le retrouver exactement à la même position et dans la même orientation à laquelle il avait été laissé lors de la déconnexion. Selon une variante, les ressorts à lame 150 pourraient être remplacés par un ou plusieurs aimants permanents ou éléments magnétiques dans le magasin 20.

Pour charger un autre outil, la machine de mesure est actionnée de manière à se centrer au-dessus de la position connue d'un outil dans un logement choisi, éventuellement en déplaçant le couvercle 50, si présent. La tête est ensuite déplacée verticalement vers le bas, jusqu'à connexion de l'outil 200 avec l'adaptateur 300 et jusqu'à que la gorge 210 ne soit plus en contact ni avec la surface inférieure de maintien de la dent 100 ni celles des guides 60. Finalement la tête se déplace horizontalement, dans la direction définie par les guides 60, jusqu'à dégagement complet de l'outil 200 du magasin 20.

Un couplage précis et reproductible de l'outil 200 dépend de manière critique de la position de ce dernier dans le magasin 20. Il est important, notamment, que l'outil repose dans son logement exactement à la même position et selon la même orientation auxquelles la machine de mesure l'a laissé, et ceci avec un minimum de contraintes mécaniques. De cette manière le couplage pourra avoir lieu précisément. Préférablement les ressorts 150 laissent une légère mobilité à l'outil pour l'opération d'accouplement, permettant aux moyens isostatiques de se positionner précisément. Le mauvais positionnement de l'outil 200 ou du magasin 20 sur une machine CMM peut provoquer des chocs lors de la reconnexion qui sont nuisibles à la précision du calibrage et de la mesure, et altérer irréversiblement les surfaces de contact.

Afin d'assurer la stabilité de l'outil 200 sur l'adaptateur 300, même en condition de déplacement dynamique, la force d'attraction magnétique entre ces deux éléments est généralement assez importante, de l'ordre de 1 kgf ou plus, pour éviter la perte de l'outil pendant le travail de la machine. Il est difficile d'arracher l'outil 200 de l'adaptateur 300 d'un seul coup, sans introduire des déplacements ou des vibrations indésirables lors du désaccouplement. Le dispositif de l'invention permet d'effectuer cette séparation graduellement et sans ces défauts, ceci en distribuant les efforts mécaniques sur trois surfaces de retenue, réduisant la force d'attraction magnétique par le basculement de l'outil, et orientant l'outil pour le décrochage évitant un décrochage aléatoire comme c'est le cas quand l'outil n'est pas incliné de façon préférentielle.

Avantageusement le dispositif de l'invention assure que les contacts et les séparations des organes de contact entre l'outil 200 et l'adaptateur 300 se succèdent toujours dans le même ordre, lors de l'accrochage et du décrochage. Ceci améliore appréciablement la précision et la reproductibilité du couplage.

Le magasin d'outil 20 de l'invention comporte en outre l'avantage que la déconnexion et la connexion des outils sont effectuées uniquement par des éléments passifs et les mouvements de la machine à mesurer, sans avoir recours à des actuateurs supplémentaires pour verrouiller ou déverrouiller l'outil.

## Revendications

1. Un magasin (20) pour stocker un ou plusieurs outils (200) d'une machine à mesurer des coordonnées, chaque outil (200) pouvant être connecté de manière détachable au bras mobile de la machine à mesurer des coordonnées, avec au moins un logement pour stocker un outil (200), dont ledit au moins un logement comprend :
des guides (60) essentiellement rectilignes et parallèles à une première direction et séparés par un espace libre, permettant l'insertion des outils (200) dans l'espace libre du logement entre les guides (60) selon la première direction et le retrait des outils (200) du logement selon la première direction :
des surfaces de retenue des guides (110), pour limiter les mouvements de l'outil dans une deuxième direction,
**caractérisé par**
une dent (100), entre les guides, limitant les mouvements de l'outil dans la deuxième direction, dans un autre plan que les surfaces de retenue des guides (60), pour provoquer un basculement de l'outil (200) lorsqu'une force est appliquée à l'outil selon la deuxième direction.

2. Magasin selon la revendication précédente,
comprenant des moyens de rétention (150), pour modérer les mouvements de l'outil, sans toutefois les interdire totalement.

3. Magasin selon l'une des revendications précédentes,
comprenant des moyens de rétention (150), pour maintenir l'outil dans la position et dans l'orientation dans lesquelles il a été déposé.

4. Magasin selon l'une des revendications précédentes,
comprenant des moyens de rétention (150), lesquels laisse une légère mobilité à l'outil pour l'opération d'accouplement, permettant aux moyens isostatiques de se positionner précisément.

5. Magasin selon la revendication précédente, dans lequel les moyens de rétention (150), par exemple des ressorts à feuille ou des éléments magnétiques, introduisent une friction entre l'outil et les guides (60), lorsque l'outil se déplace dans la première direction.

6. Combinaison d'un magasin (20) selon l'une des revendications précédentes et d'un outil (200) pouvant être connecté de manière détachable au bras mobile de la machine à mesurer des coordonnées, dans lequel l'outil (200) comporte des zones d'engagement (210), aptes à collaborer avec les guides (60) et les surfaces de retenue (110, 120) du au moins un logement.

7. Combinaison selon la revendication précédente, dans laquelle les zones d'engagement (210) de l'outil (200) sont symétriques relativement à un axe de symétrie, et dans laquelle, lorsque l'outil (200) est inséré dans le logement du magasin, l'axe de symétrie est parallèle à la deuxième direction.

8. Combinaison selon l'une des revendications 6-7, dans laquelle la connexion entre l'outil (200) et le bras mobile de la machine à mesurer est magnétique.

9. Combinaison selon l'une des revendications 6-8, dans laquelle la connexion entre l'outil (200) et le bras mobile de la machine à mesurer est effectuée par un adaptateur (300) apte à coopérer avec l'outil (200) fixé sur le bras mobile de la machine à mesurer.

10. Combinaison selon l'une des revendications 6-9, dans laquelle la force de connexion entre l'outil (200) et le bras mobile ou l'adaptateur est réduite par le basculement de l'outil (200).

11. Méthode pour actionner une machine de mesure des coordonnées ayant un bras mobile comprenant des moyens de connexion, pour échanger des outils interchangeables (200), un magasin d'outils (20) selon la revendication 1 étant présent dans la plage d'accès du bras mobile, le magasin ayant au moins un logement pour stocker un outil (200), la méthode comprenant les étapes de :
déplacer le bras mobile selon une première direction, de manière à engager un outil (200) connecté au bras mobile dans un logement du magasin;
éloigner le bras mobile du magasin selon une deuxième direction, de manière à détacher l'outil (200) du bras mobile;
dans lequel, pendant l'éloignement du bras mobile du magasin, des surfaces de retenue (110, 120) du logement limitent les mouvements de l'outil dans la deuxième direction et exercent sur l'outil une force opposée à celle exercée par les moyens de connexion, et une couple de basculement, pour faire basculer l'outil (200) et réduire la force exercée sur l'outil par les moyens de connexion.

12. Méthode selon la revendication précédente, dans laquelle la connexion entre l'outil (200) et le bras mobile de la machine à mesurer est magnétique.

13. Méthode selon l'une des revendications 11-12, dans laquelle l'outil (200) et le bras mobile sont liés de manière précise et reproductible par une liaison isostatique avec plusieurs organes de contact, déterminant exactement le positionnement de l'outil (300) relatif au bras mobile, et dans lequel les contacts et les séparations des organes de contact de la liaison isostatique se succèdent toujours dans le même ordre, lors de l'accrochage et du décrochage.

14. Méthode selon l'une des revendications 11-13, dans laquelle l'outil (200) est incliné selon une direction préférentielle grâce à la dent (100), évitant un glissement non symétrique entre les guides (60) lors du décrochement.

15. Méthode selon l'une des revendications 11-14, selon laquelle, l'outil est positionné dans le logement (30) de façon à ne pas entrer complètement en contact avec les guides, et ainsi conserver une légère mobilité.

## Claims

1. Tool rack (20) for storing one or several tools (200) of a coordinate measuring machine, each tool (200) being connectable in removable fashion to the mobile arm of the coordinate measuring machine, with at least one lodging for storing a tool (200), whose said at least one lodging has:
guides (60) essentially rectilinear and parallel to a first direction and separated by a free space allowing the insertion of the tools (200) into the free space of the lodging between the guides (60) according to the first direction and the removal of the tools (200) from the lodging along the first direction;
retaining surfaces of the guides (110) to limit the movements of the tool in a second direction,
**characterized by**
a tooth (100), between the guides, limiting the movements of the tool in the second direction, in another plane than the retaining surfaces of the guides, to cause the tool (200) to tilt when a force is applied to the tool along the second direction.

2. The tool rack according to the preceding claim, having retaining means (150) to dampen the tool's movements without preventing them totally.

3. The tool rack according to one of the preceding claims, having retaining means (150) for holding the tool in the position and in the orientation in which it has been placed.

4. The tool rack according to one of the preceding claims, having retaining means (150) that leave the tool a slight mobility for the coupling operation, allowing the isostatic means to position themselves accurately.

5. The tool rack according to the preceding claim, wherein the retaining means (150), for example blade springs or magnetic elements, cause a friction between the tool and the guides (60) when the tool moves in the first direction.

6. Combination of a tool rack (20) according to one of the preceding claims and of a tool (20) capable of being connected in removable fashion to the mobile arm of a coordinate measuring machine, wherein the tool (200) has engaging zones (210) capable of working with the guides (60) and the retaining surfaces (110, 120) of the at least one lodging.

7. The combination according to the preceding claim, wherein the engaging zones (210) of the tool (200) are symmetrical relative to a symmetry axis and wherein, when the tool (200) is inserted into the tool rack lodging, the symmetry axis is parallel to the second direction.

8. The combination according to any of the claims 6-7,
wherein the connection between the tool (200) and the mobile arm of the measuring machine is magnetic.

9. The combination according to any of the claims 6-8,
wherein the connection between the tool (200) and the mobile arm of the measuring machine is performed by an adapter (300) capable of working with the tool (200) fastened to the mobile arm of the measuring machine.

10. The combination according to any of the claims 6-9,
wherein the connection force between the tool and the mobile arm or the adapter is reduced by the tilting of the tool.

11. Method for actuating a coordinate measuring machine having a mobile arm with connection means for switching interchangeable tools (200), a tool rack (20) according to the claim 1 being available in the access range of the mobile arm, the tool rack having at least one lodging for storing a tool (200), the method having the steps of:
moving the mobile arm along a first direction, so as to engage a tool (200) connected to the mobile arm in a lodging of the tool rack;
moving away the mobile arm of the tool rack along a second direction so as to disunite the tool (200) from the mobile arm;
wherein, when the mobile arm moves away from the tool rack, retaining surfaces (110, 120) of the lodging limit the movements of the tool in the second direction and exert on the tool a force opposed to that exerted by the connection means, and a tilting torque to tilt the tool (200) and reduce the force exerted on the tool by the connection means.

12. The method according to the preceding claim, wherein the connection between the tool (200) and the mobile arm of the measuring machine is magnetic.

13. The method according to one of the claims 11-12, wherein the tool (200) and the mobile arm are connected in accurate and reproducible manner by an isostatic connection with several contact elements, determining exactly the tool's positioning (300) relative to the mobile arm, and wherein the contacts and separations of the contact organs of the isostatic connection always follow in the same order during hooking and unhooking.

14. The method according to one of the claims 11-13, wherein the tool (200) is tilted along a preferred direction thanks to the tooth (100), avoiding a non-symmetric sliding between the guides (60) during unhooking.

15. The method according to one of the claims 11-14, wherein the tool is positioned in the lodging (30) so as not to come completely into contact with the guides and thus retain a mobility.

## Patentansprüche

1. Werkzeughalter (20), um ein oder mehrere Werkzeuge (200) einer Koordinatenmessmaschine aufzunehmen, jedes Werkzeug (200) ist in einer lösbaren Weise mit dem beweglichen Arm der Koordinatenmessmaschine verbindbar, mit mindestens einer Aufnahme, um ein Werkzeug (200) aufzunehmen, dessen besagte mindestens eine Aufnahme ausweist:
Führungsschienen (60) im Wesentlichen rechteckig und parallel zu einer ersten Richtung und getrennt von einem Leerraum, was das Einführen von Werkzeugen (200) in den Freiraum der Aufnahme zwischen den Führungsschienen (60) gemäss der ersten Richtung und das Entfernen des Werkzeugs (200) von der Aufnahme gemäss der ersten Richtung erlaubt;
Zurückhalteoberflächen der Führungsschienen (60), um die Bewegungen des Werkzeugs in eine zweite Richtung zu begrenzen, **gekennzeichnet durch**
einen Zahn (100) zwischen den Führungsschienen (60), der die Bewegungen des Werkzeugs in die zweite Richtung begrenzt, in einer anderen Ebene als die Zurückhalteoberflächen der Führungsschienen (60), um das Werkzeug (200) zu kippen, wenn eine Kraft auf das Werkzeug gemäss der zweiten Richtung angewandt wird.

2. Der Werkzeughalter gemäss dem vorhergehenden Anspruch, mit Zurückhaltemitteln (150), um die Bewegung des Werkzeugs zu dämpfen, ohne sie ganz zu verhindern.

3. Der Werkzeughalter gemäss einem der vorhergehenden Ansprüche, mit Zurückhaltemitteln (150), um das Werkzeug in der Position und der Orientierung zu halten, in welches es platziert wurde.

4. Der Werkzeughalter gemäss einem der vorhergehenden Ansprüche, mit Zurückhaltemitteln (150), welche dem Werkzeug eine leichte Beweglichkeit für die Kuppeloperation lässt, was es den isostatischen Mittel erlaubt, sich selbst akkurat zu positionieren.

5. Der Werkzeughalter gemäss dem vorhergehenden Anspruch, in welchem die Zurückhaltemittel (150), zum Beispiel Blattfedern oder magnetische Elemente, um eine Reibung zwischen dem Werkzeug und den Führungselementen (60) zu erzeugen, wenn das Werkzeug sich in die erste Richtung bewegt.

6. Kombination von einem Werkzeughalter (20) gemäss einem der vorhergehenden Ansprüche und eines Werkzeug (20), das in einer lösbaren Weise mit dem beweglichen Arm der Koordinatenmessmaschine verbindbar ist, wobei das Werkzeug (200) Kupplungszonen (210) aufweist, die fähig sind, mit dem Führungsschienen (60) und dem Zurückhalteflächen (110, 120) von mindestens einer Aufnahme zusammenzuarbeiten.

7. Die Kombination gemäss dem vorhergehenden Anspruch, wobei die Kupplungszonen (210) des Werkzeugs (200) symmetrisch relativ zu einer Symmetrieachse sind und wobei das Werkzeug (200) in die Werkzeughalteraufnahme eingebracht wird, wobei die Symmetrieachse parallel zu der zweiten Richtung ist.

8. Die Kombination gemäss einem der Ansprüche 6-7, wobei die Verbindung zwischen dem Werkzeug (200) und dem mobilen Arm der Messmaschine magnetisch ist.

9. Die Kombination gemäss einem der Ansprüche 6-8, wobei die Verbindung zwischen dem Werkzeug (200) und dem beweglichen Arm der Messmaschine durch einen Adapter (300) durchgeführt wird, der fähig ist, mit dem Werkzeug (200) zusammenzuarbeiten, das an dem mobilen Arm der Messmaschine befestigt ist.

10. Die Kombination gemäss einem der Ansprüche 6-9, wobei die Verbindungskraft zwischen Werkzeug und dem mobilen Arm oder dem Adapter durch die Neigung des Werkzeugs reduziert wird.

11. Verfahren, um eine Koordinatenmessmaschine mit einem mobilen Arm mit Verbindungsmitteln, um austauschbare Werkzeuge (200) zu wechseln, einem Werkzeughalter (20) gemäss dem Anspruch 1, das in dem Zugriffsbereich des mobilen Arms steht, wobei das Werkzeughalter mindestens eine Aufnahme aufweist, um ein Werkzeug (200) aufzunehmen, das Verfahren weist folgende Schritte auf:
Bewegen des beweglichen Arms entlang einer ersten Richtung, um ein Werkzeug (200), das mit dem mobilen Arm verbunden ist, in einer Aufnahme des Werkzeughalters zu kuppeln;
Wegbewegen des mobilen Arms des Werkzeughalters entlang einer zweiten Richtung, um das Werkzeug (200) von dem mobilen Arm zu entfernen;
wobei der bewegliche Arm sich von dem Werkzeughalter wegbewegt, und wobei Zurückhalteflächen (110, 120) der Aufnahme die Bewegungen des Werkzeugs in die zweite Richtung begrenzen und auf das Werkzeug eine Kraft ausüben, die derjenigen, die von den Verbindungsmitteln ausgeübt wird, entgegengesetzt ist, und eine Neigungskraft, um das Werkzeug (200) und die Kraft, die auf das Werkzeug durch die Verbindungsmittel ausgeübt wird, zu reduzieren.

12. Das Verfahren gemäss dem vorhergehenden Anspruch, wobei die Verbindung zwischen dem Werkzeug (200) und dem beweglichen Arm der Messmaschine magnetisch ist.

13. Das Verfahren gemäss einem der Ansprüche 11-12, wobei das Werkzeug (200) und der bewegliche Arm in einer gewissenhaften und wieder herstellbaren Weise durch eine isostatische Verbindung mit verschiedenen Kontaktelementen verbunden sind, die exakt die Positionierung der Werkzeugs (300) relativ zu dem beweglichen Arm bestimmen, und wobei die Kontakte und Trennungen der Kontaktkörper der isostatischen Verbindung immer in derselben Reihenfolge während des Einhaktens und des Enthakens folgen.

14. Das Verfahren gemäss einem der Ansprüche 11-13, wobei das Werkzeug (200) entlang einer bevorzugten Richtung dank eines Zahnes (100) geneigt ist, um ein nicht symmetrisches Gleiten zwischen den Führungsschienen (60) während des Enthakens zu vermeiden.

15. Das Verfahren gemäss einem der Ansprüche 11-14, wobei das Werkzeug in einer Aufnahme (30) positioniert ist, um nicht in Kontakt mit dem Führungsschienen zu kommen und deshalb die Mobilität erhalten.
